# EUROPÄISCHE PATENTANMELDUNG

(11) **EP 3 118 557 A2**
(43) Veröffentlichungstag der Anmeldung: **18.01.2017**
(21) Anmeldenummer: 16001541.8
(22) Anmeldetag: 12.07.2016
(51) Int. Cl.: F28D 20/00, F28D 20/02, F28D 21/00

(54) **FESTBETTKÄLTESPEICHER UND VERFAHREN ZUR SPEICHERUNG VON THERMISCHER ENERGIE**

(30) Priorität: 16.07.2015 DE 102015009256
(71) Anmelder: Linde Aktiengesellschaft, 80331 München (DE)
(72) Erfinder: Steinbauer, Manfred, 82399 Raisting (DE); Alekseev, Alexander, 82515 Wolfratshausen (DE); Obermeier, Stephan, 85658 Egmating (DE); Estiot, Elise, 81379 München (DE)

(57) **Zusammenfassung**

Die Erfindung betrifft einen Festbettkältespeicher zur Speicherung von thermischer Energie von Fluiden und ein Verfahren zum Betreiben eines Festbettkältespeichers zur Speicherung von thermischer Energie, durch Übertragung von thermischer Energie von einem Fluid auf ein Speichermaterial oder von einem Speichermaterial auf ein Fluid, durch direkten Kontakt zwischen dem Speichermaterial und dem Fluid. Der Festbettkältespeicher ist in mindestens zwei Sektionen aufgeteilt, die miteinander in Verbindung stehen und bei mindestens zwei Sektionen unterscheiden sich die Speichermaterialien.

## Beschreibung

Die Erfindung betrifft einen Festbettkältespeicher zur Speicherung von thermischer Energie von Fluiden und ein Verfahren zum Betreiben eines Festbettkältespeichers zur Speicherung von thermischer Energie, durch Übertragung von thermischer Energie von einem Fluid auf ein Speichermaterial oder von einem Speichermaterial auf ein Fluid, durch direkten Kontakt zwischen dem Speichermaterial und dem Fluid.

Als Festbettkältespeicher werden im Folgenden vor allem Festbettkältespeicher zur Speicherung von Kälte, also Festbettspeicher oder kryogene Energiespeicher verstanden. Insbesondere sind solche Festbettkältespeicher gemeint in denen ein direkter Kontakt zwischen dem Speichermaterial und dem Übertragungsfluid vorhanden ist. Die Speicherung von Energie ist besonders in Zeiten interessant in denen beispielsweise ein Energieüberschuss im Stromnetz vorliegt.
Aus dem Stand der Technik sind bereits Festbettkältespeicher bekannt die wie in EP2397669 A2 beschrieben, dort jedoch bezeichnet als Regeneratoren, zur Verflüssigung von Luft eingesetzt werden, indem diese verflüssigt wird, gespeichert wird und bei Bedarf wieder entspannt und erwärmt wird. Festbettkältespeicher und Regeneratoren sind dabei meist als Druckbehälter konstruiert in denen das Speichermaterial üblicherweise aus Steinen oder Keramik besteht wie in US20130240171 A1, WO2013034908 A2 oder US20120216520 A1 gezeigt ist.
In diesen Vorrichtungen und Verfahren wird während der Beladephase des Speichermaterials ein verdichtetes Fluid, insbesondere flüssige Luft, entspannt. Die kalte Luft wird über den Festbettkältespeicher geleitet, der die Luft erwärmt und sich selbst dadurch abkühlt. In der Entladephase wird ein Fluid verdichtet, welches sich dabei erwärmt. Das warme Fluid wird über den kalten Festbettkältespeicher geleitet und kühlt sich dadurch ab, während sich der Festbettkältespeicher erwärmt.

Konstruktiv ähnelt ein Festbettkältespeicher einem Regenerator, welcher, wie in WO9942773 A1 beschrieben, zur Reinigung von Luft in Verbindung mit einem Verfahren zur Luftzerlegung eingesetzt werden kann. Aus diesem Grund werden beide Bezeichnungen oft gleichwertig gebraucht und nicht genau unterschieden.

Diese Apparate unterscheiden sich jedoch verfahrenstechnisch. Ein Regenerator fungiert in erster Linie als Wärmeüberträger von einem Stoffstrom auf einen anderen. Es werden so immer mindestens zwei Regeneratoren benötigt um einen kontinuierlichen Betrieb zu gewährleisten oder sie werden durch einen konventionellen Wärmetauscher ersetzt. Die Hauptfunktion eines Kältespeichers oder Festbettkältespeichers besteht dagegen in der Speicherung der Kälte für eine längere Zeit von beispielsweise mehr als 30 Minuten. Ein Kältespeicher kann nicht durch einen Wärmetauscher ersetzt werden. Unterschieden werden muss zudem die durchschnittliche lokale Temperaturänderung. Diese beträgt in einem Regenerator weniger als 10 °C, in einem Kältespeicher oder Festbettkältespeicher dagegen durchschnittlich 50 °C, mindestens jedoch 30 °C.
An die Festbettkältespeicher werden hohe Anforderungen gestellt. Sie sollen einen möglichst hohen thermischen Wirkungsgrad aufweisen, bei einem zeitgleich geringen Druckverlust, um den Wirkungsgrad der Gesamtanlage positiv zu beeinflussen. Zudem sollten sie möglichst kostengünstig und wartungsfrei gebaut sein. Dies betrifft sowohl den Druckbehälter selbst als auch das Speichermaterial und die Betriebsweise des Festbettkältespeichers.
Um dem Druck im Behälter standzuhalten sind in der Regel Metall Druckbehälter aus Aluminium oder Stahl als äußere Hülle geeignet. Ein preiswertes Speichermaterial wäre Stein oder Keramik. Aufgrund der stark unterschiedlichen thermischen Ausdehnungskoeffizienten zwischen diesen Materialien sind die Behälter konstruktionstechnisch sehr aufwendig zu realisieren. So wird in der Regel Speichermaterial aus dem gleichen Metall wie der Druckbehälterwand verwendet. Dies erfordert im Vergleich zu kostengünstigem Stein, insbesondere Kieselsteinen jedoch einen größeren Investitionsbedarf.
Ein weiteres Problem ergibt sich durch die Betriebsweise des Festbettkältespeichers. Die maximal mögliche Wärmekapazität der Schüttung, also die maximal mögliche Temperaturänderung des Speichermaterials wird aufgrund des wandernden Temperaturprofils nicht voll ausgeschöpft. Dies ist bereits in US20140014290 beschrieben. Über die Reaktorlänge hinweg wird weniger Kälte ab oder zugeführt, so dass die mittlere Temperaturänderung der Schüttung geringer ist als theoretisch möglich. Dies hat zur Folge, dass die Speichervorrichtungen entsprechend größer konstruiert werden müssen. Meist um einen Faktor 2 bis 4. Die Investitions- und die Betriebskosten steigen dadurch.

Es ist Aufgabe der vorliegenden Erfindung, eine kompaktere Auslegung und Konstruktion sowie eine effizientere Betriebsweise von Festbettkältespeichern zu ermöglichen.

Diese Aufgabe wird vorrichtungsseitig dadurch gelöst, dass der Festbettkältespeicher in mindestens zwei Sektionen aufgeteilt ist, die miteinander in Verbindung stehen und dass die Sektionen mindestens zwei unterschiedliche Speichermaterialien enthalten. Vorteilhafterweise ist der Festbettkältespeicher so ausgelegt, dass er zur Speicherung von Kälte im Bereich von -196 °C bis 30°C oder Umgebungstemperatur geeignet ist. Besonders bevorzugt ist eine Ausführungsform des Festbettkältespeichers, wenn die Speichermaterialien zur Speicherung von Kälte geeignet sind und insbesondere zur Gruppe Stein, Metall, Keramik gehören. Das Speichermaterial kann auch aus Stoffgemischen dieser Gruppe, insbesondere aus Roheisen oder einer gemischte Schüttung aus Stein und Keramik bestehen. Die unterschiedlichen Sektionen über die Länge des Festbettkältespeichers hinweg, sind unterschiedlichen Temperaturschwankungen ausgesetzt. So ist es möglich je nach Temperaturbereich geeignete möglichst kostengünstige Speichermaterialen zu verwenden.
So kann in der Sektion, in welche das kalte Fluid in den Festbettkältespeicher eintritt oder austritt, also in dem Bereich in dem es am kältesten ist, eine kostengünstige Schüttung aus Stein oder Keramik verwendet werden. In einem Temperaturbereich von -190 °C bis -100 °C ist der Effekt der thermischen Ausdehnung so gering, dass keine mechanischen Belastungen des metallischen Druckbehälters zu erwarten sind. In den weiteren Bereichen kann dann ein metallisches Speichermaterial verwendet werden, so dass sich das Speichermaterial und der Mantel des Druckbehälters gleichmäßig ausdehnen bzw. zusammenziehen können. Besonders bevorzugt ist es wenn das Festbettvolumen der Sektion, welches Speichermaterial aus der Gruppe Stein oder Keramik enthält, mindestens 30 % des Gesamtfestbettkältespeichervolumens beträgt. Besonders bevorzugt weist das Speichermaterial eine spezifische Oberfläche von 100 m²/m³ bis 10000 m²/m³, insbesondere von 300 m²/m³ bis 1000 m²/m³ aufweisen und eine Porosität von 0,2 bis 0,5, insbesondere von 0,3 oder kleiner als 0,4 ist.

In einer bevorzugten Ausführungsform des Festbettkältespeichers ist der Anströmquerschnitt einer Sektion um mindestens den Faktor 2 kleiner ist als bei den anderen Sektionen. Insbesondere ist der angeströmte Querschnitt der Sektion, welche Stein oder Keramik enthält kleiner, als der der Sektion, welche mit Metall gefüllt ist. Das Volumen des Speichermaterials bleibt davon unbeeinflusst. Vorteile ergeben sich durch den veränderten Querschnitt und einem geringeren Druckverlust vor allem für einen optimierteren Wärmeübergang.

Bei einer weiteren bevorzugten Ausführungsform des Festbettkältespeichers sind die Sektionen in mehrere Teile unterteilt, welche durch mehrere Ventile verbunden sind, so dass eine partielle Nutzung der Sektionen und des Festbettkältespeichers möglich ist. Durch die partielle Nutzung der einzelnen Sektionen kann eine gleichmäßigere Temperaturverteilung in den Sektionen erreicht werden und der Druckverlust reduziert werden.
Verfahrensseitig wird die Aufgabe dadurch gelöst, dass ein kaltes Fluid erst in eine erste Sektion des Festbettkältespeichers, welche als Speichermaterial Stein oder Keramik enthält und anschließend in mindestens eine weitere Sektion, welche als Speichermaterial Stein, Keramik oder Metall enthält, geleitet wird und als wärmeres Fluid austritt sowie dass ein warmes Fluid in umgekehrter Reihenfolge durch die Sektionen eines Festbettkältespeicher geleitet wird und als kälteres Fluid austritt. Durch die Verwendung von unterschiedlichen Speichermaterialien können die durch thermische Ausdehnung der Materialien entstehenden mechanischen Spannungen auf den Druckbehälter verringert werden. Zudem können die Speichermaterialen entsprechend der jeweils nötigen Wärmekapazität ausgewählt und gegebenenfalls variiert werden.
Besonders bevorzugt wird dieses Verfahren verwendet, wenn es sich bei dem Fluid zur Übertragung von thermischer Energie um flüssige Luft oder flüssigen Stickstoff handelt. Durch die Verwendung eines nicht aggressiven und nicht korrosiven Fluides wie beispielsweise Luft ist ein direkter Kontakt zwischen dem Fluid und dem Speichermaterial möglich. Das Speichermaterial wird chemisch nicht angegriffen, so dass eine große Auswahl an möglichen Materialien zur Verfügung steht. Zudem sind kaum Verschleißerscheinungen zu erwarten, so dass keine Wartung und kein Austausch des Speichermaterials nötig sind. Dies reduziert die Investitions- und Betriebskosten.

Vorteilhafterweise wird das Verfahren so betrieben, dass der Druck des Fluides in der Beladephase des Speichermaterials zwischen 40 und 75 bar beträgt und der Druck des Fluides in der Entladephase des Speichermaterials mindestens 5 bar, insbesondere jedoch zwischen 10 und 40 bar, bevorzugt jedoch zwischen 15 und 20 bar über dem Druck in der Beladephase liegt.
Bei der Beladephase des Speichermaterials strömt kaltes Fluid durch den Kältespeicher, kühlt diesen ab und wird selbst erwärmt, bei der Entladephase des Speichermaterials strömt warmes Fluid durch den Kältespeicher, wärmt diesen auf und wird selbst gekühlt. Durch die Anpassung der Drücke des Fluides bei der Be- und Entladung des Speichermaterials kann der Wirkungsgrad des Festbettkältespeichers durch bessere Ausnutzung der Wärmekapazität des Speichermaterials verbessert werden. Entsprechend kleiner kann der Festbettkältespeicher dimensioniert werden. So kann ein Festbettkältespeicher bei einem Druck in der Beladephase von 43 bar und einem Druck in der Entladephase von 83 bar um einen Faktor 1,7 kleiner ausfallen, als ein Festbettkältespeicher mit einem Druck in der Beladephase von 63 bar und einem Druck in der Entladephase von 68 bar.

In einer bevorzugten Verfahrensweise ist der Festbettkältespeicher, in mindestens zwei Sektionen, mit mindestens zwei unterschiedlichen Speichermaterialen, unterteilt, welche durch Ventile miteinander verbunden sind, welche so geöffnet und geschlossen werden, dass nur ein Teil der jeweiligen Sektionen beladen oder entladen wird oder die Teile nacheinander be- oder entladen werden.
So kann beispielsweise zuerst der erste Teil der ersten Sektion und der erste Teil einer zweiten Sektion beladen werden, wobei beide Sektionen unterschiedliche Speichermaterialien enthalten, bevor die Ventile umgeschaltet werden und die nachfolgenden Teile beladen werden. Dadurch ergibt sich innerhalb der Sektionen ein gleichmäßigeres Temperaturprofil. Auch diese Betriebsweise ermöglicht eine bessere Ausnutzung der Wärmekapazität des Speichermaterials und eine entsprechend kleinere Dimensionierung des Festbettkältespeichers. Da das Fluid den Speicher zudem nur teilweise durchfließt ist auch der Druckverlust geringer. Die Abtrennung der Sektionen voneinander und/oder Aufteilung innerhalb einer Sektion kann, neben der Trennung durch Ventile, auch durch andere dem Fachmann bekannte Verfahren, insbesondere der Verwenden von verschiebbaren Injektionsstellen oder durch verschiebbare Abdeckungen gewährleistet werden.

Die Vorteile der Erfindung ergeben sich durch die optimierte Ausgestaltung und verbesserte Betriebsweise. Mechanische Spannungen, hervorgerufen durch unterschiedliche thermische Ausdehnungskoeffizienten verschiedener Materialien werden durch die Unterteilung des Festbettkältespeichers in kleinere Sektionen mit verschiedenen Materialien vermieden. So kann teures Speichermaterial, wie Metall, in Bereichen in denen die thermische Ausdehnung vernachlässigbar klein ist, durch günstigeres aus Stein oder Keramik ersetzt werden. Durch eine optimierte Betriebsweise bezüglich des Druckes in der Be- und Entladephase sowie durch eine adäquate Verschaltung der Sektionen wird eine bessere Ausnutzung der Wärmekapazität des Speichermaterials ermöglicht. So ist eine kleinere Dimensionierung des Festbettkältespeichers möglich und es können wiederum Kosten eingespart werden.

Anwendbar ist der Festbettkältespeicher zur Speicherung von thermischer Energie von Fluiden insbesondere als Regenerator bei der Luftzerlegung oder zur Speicherung von Überschussenergie zur Entlastung des Stromnetzes.

Im Folgenden ist ein Ausführungsbeispiel der Erfindung anhand von Figuren schematisch dargestellt. Die verwendeten Bezugszeichen sind in allen dargestellten Ausführungsbeispielen gleich gewählt, wenn gleiche Teile beschrieben werden.
- Figur 1: zeigt schematisch einen Festbettkältespeicher mit zwei Sektionen
- Figur 2: zeigt schematisch einen Festbettkältespeicher mit zwei Sektionen die einen unterschiedlichen Anströmquerschnitt aufweisen.
- Figur 3: zeigt schematisch einen Festbettkältespeicher mit zwei Sektionen die jeweils unterteilt sind.

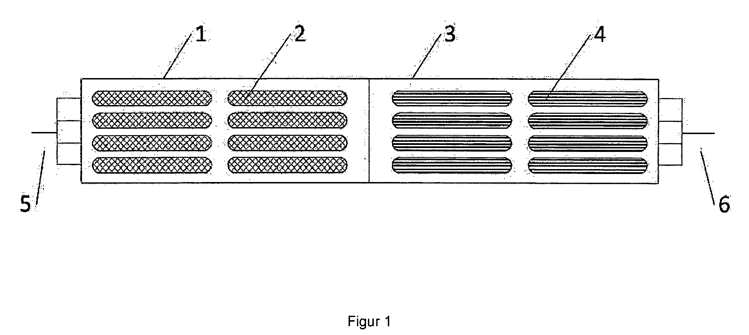

In Figur 1 ist schematisch ein Festbettkältespeicher dargestellt, welcher in zwei Sektionen unterteilt ist. Sektion 1 markiert die erste Sektion. In der Beladephase des Speichermaterials tritt das kalte Fluid 5 zuerst in die Sektion 1 ein. Diese enthält als Speichermaterial 2 Stein, welches zuerst wärmer ist und durch das kalte Fluid abgekühlt wird so dass sich das Fluid erwärmt. Das Fluid wird direkt weitergleitet in die zweite Sektion 3, welche als Speichermaterial 4 Metall enthält. Von dort wird das erwärmte Fluid 6 einer weiteren Verwendung oder Speicherung zugeführt. Das Speichermaterial 4 ist nun ebenfalls kälter als zuvor.
In der Entladephase tritt das warme Fluid 6 zuerst in Sektion 3 ein und wird durch das kalte Speichermaterial 4 abgekühlt. Anschließend in Sektion 1 wird es durch das Speichermaterial 2 weiter abgekühlt und tritt als kaltes Fluid 5 aus. Die Speichermaterialien 4 und 2 sind nun wärmer als zuvor.

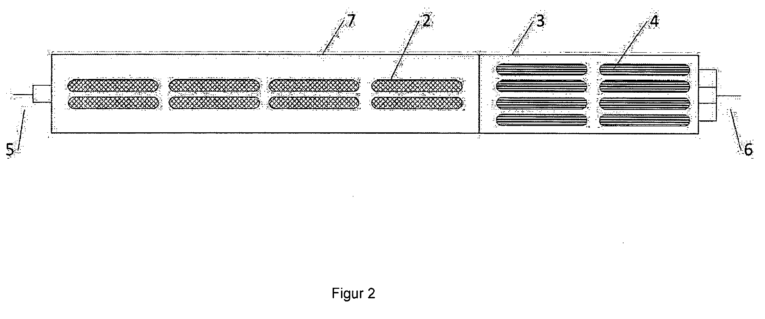

Figur 2 zeigt im Unterschied zu Figur 1 ein Ausführungsbeispiel mit einem unterschiedlichen Anströmquerschnitt einer Sektion. Der Anströmquerschnitt von Sektion 7 ist im Vergleich zu Sektion 3 um einen Faktor 2 kleiner. Das Volumen des Speichermaterials 2 bleibt im Vergleich zu Figur 1 allerdings erhalten.

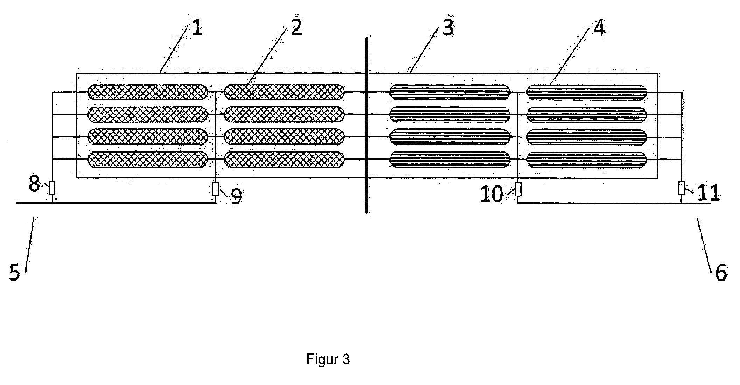

Figur 3 zeigt ein Ausführungsbeispiel in dem die Sektionen 1 und 3 weiter unterteilt sind. Durch die Ventile 8-11 kann der Festbettkältespeicher komplett oder teilweise durchströmt werden. Wenn Ventil 8 und 11 geöffnet und Ventil 9 und 10 geschlossen sind ergibt sich in der Betriebsweise kein Unterschied zu Figur 1. Im Beispiel in Figur 3 sind nun aber zu Beginn Ventil 8 und 10 geöffnet und Ventil 9 und 11 geschlossen. Dadurch wird zuerst die Sektion 1 durchströmt und nur der erste Teil von Sektion 3. Wenn nun der erste Teil von Sektion 1 vollständig abgekühlt ist können Ventil 8 und 10 geschlossen werden und Ventil 9 und 11 geöffnet werden. Der zweite Teil von Sektion 1 und Sektion 3 ist noch nicht vollständig abgekühlt, so dass diese Wärmekapazität noch genutzt werden kann. Durch die verschiedenen Ventilschaltungen wird zudem die Länge des Festbettkältespeichers reduziert, so dass der Druckverlust geringer ist. Bei der Umkehrung der Fließrichtung kann die Ventilschaltung entsprechend in umgekehrter Reihe erfolgen. Es versteht sich, dass durch eine andere Anordnung der Ventile auch andere Unterteilungen und Verschaltungen möglich sind.

## Patentansprüche

1. Festbettkältespeicher zur Speicherung von thermischer Energie von Fluiden, **dadurch gekennzeichnet, dass** der Festbettkältespeicher in mindestens zwei Sektionen aufgeteilt ist, die miteinander in Verbindung stehen und dass die Sektionen Speichermaterialien enthalten und dass sich bei mindestens zwei Sektionen die Speichermaterialien unterscheiden.

2. Festbettkältespeicher nach Anspruch 1, **dadurch gekennzeichnet, dass** der Anströmquerschnitt einer Sektion (7) um mindestens den Faktor 2 kleiner ist als bei den anderen Sektionen (3).

3. Festbettkältespeicher nach Anspruch 1 oder 2, **dadurch gekennzeichnet, dass** die Sektionen in mehrere Teile unterteilt sind, welche durch mehrere Ventile (8-11) verbunden sind, so dass eine partielle Nutzung der Sektionen und des Festbettkältespeichers möglich ist.

4. Festbettkältespeicher nach mindestens einem der Ansprüche 1 bis 3, **dadurch gekennzeichnet, dass** der Festbettkältespeicher so ausgelegt ist, dass er zur Speicherung von Kälte im Bereich von -196°C bis 30°C geeignet ist.

5. Festbettkältespeicher nach mindestens einem der Ansprüche 1 bis 4, **dadurch gekennzeichnet, dass** die Speichermaterialien zur Speicherung von Kälte geeignet sind und insbesondere zur Gruppe Stein, Metall, Keramik gehören.

6. Festbettkältespeicher nach mindestens einem der Ansprüche 1 bis 5, **dadurch gekennzeichnet, dass** die Speichermaterialien eine spezifische Oberfläche von 100 m²/m³ bis 10000 m²/m³, insbesondere von 300 m²/m³ bis 1000 m²/m³, aufweisen und eine Porosität von 0,2 bis 0,5, insbesondere 0,3.

7. Festbettkältespeicher nach mindestens einem der Ansprüche 1 bis 6, **dadurch gekennzeichnet, dass** das Festbettvolumen einer Sektion (1, 7), welche Speichermaterial aus der Gruppe Stein oder Keramik enthält, mindestens 30 % des Gesamtfestbettkältespeichervolumens beträgt.

8. Verfahren zum Betreiben eines Festbettkältespeichers, zur Speicherung von thermischer Energie, durch Übertragung von thermischer Energie von einem Fluid auf ein Speichermaterial oder von einem Speichermaterial auf ein Fluid, durch direkten Kontakt zwischen dem Speichermaterial und dem Fluid, **dadurch gekennzeichnet, dass** ein kaltes Fluid (5) erst in eine erste Sektion (1) des Festbettkältespeichers, welche als Speichermaterial (2) Stein oder Keramik enthält und anschließend in mindestens eine weitere Sektion (3), welche als Speichermaterial (4) Stein, Keramik oder Metall enthält, geleitet wird und als wärmeres Fluid (6) austritt sowie dass ein warmes Fluid (6) in umgekehrter Reihenfolge durch die Sektionen (1,3) eines Festbettkältespeicher geleitet wird und als kälteres Fluid (5) austritt.

9. Verfahren nach Anspruch 8, **dadurch gekennzeichnet, dass** es sich bei dem Fluid zur Übertragung von thermischer Energie um flüssige Luft oder flüssigen Stickstoff handelt.

10. Verfahren nach einem der Ansprüche 8 bis 9, **dadurch gekennzeichnet, dass** der Druck des Fluides in der Beladephase des Speichermaterials zwischen 40 und 75 bar beträgt und der Druck des Fluides in der Entladephase des Speichermaterials mindestens 5 bar, insbesondere jedoch zwischen 10 und 40 bar, besonders bevorzugt jedoch zwischen 15 und 20 bar über dem Druck in der Beladephase liegt.

11. Verfahren nach einem der Ansprüche 8 bis 10, **dadurch gekennzeichnet, dass** der Festbettkältespeicher, in mindestens zwei Sektionen, mit mindestens zwei unterschiedlichen Speichermaterialen, unterteilt ist, welche durch Ventile miteinander verbunden sind, welche so geöffnet und geschlossen werden, dass nur ein Teil der jeweiligen Sektionen beladen oder entladen wird oder die Teile nacheinander be- oder entladen werden.
